# FASCICULE DE BREVET EUROPEEN

(11) **EP 4 376 039 B1**
(45) Date de publication et mention de la délivrance du brevet: **19.03.2025**
(21) Numéro de dépôt: 23211647.5
(22) Date de dépôt: 23.11.2023
(51) Int. Cl.: H01H 9/54

(54) **DISPOSITIF DE COUPURE DE CIRCUIT ÉLECTRIQUE À PROTECTION EN SURTENSION ET PROCÉDÉ DE COUPURE ASSOCIÉ**
ABSCHALTVORRICHTUNG FÜR ELEKTRISCHE SCHALTUNG MIT ÜBERSPANNUNGSSCHUTZ UND ABSCHALTVERFAHREN DAFÜR
DEVICE FOR INTERRUPTING AN ELECTRIC CIRCUIT WITH OVERVOLTAGE PROTECTION AND ASSOCIATED BREAKING METHOD

(30) Priorité: 24.11.2022 FR 2212296
(43) Date de publication de la demande: 29.05.2024
(73) Titulaire: SCHNEIDER ELECTRIC INDUSTRIES SAS, 92500 Rueil-Malmaison (FR)
(72) Inventeur: DOMEJEAN, Eric, 38340 Voreppe (FR); BRENGUIER, Jerôme, 38470 L'Albenc (FR)
(74) Mandataire: Lavoix

(56) Documents cités:
- EP-A1- 3 057 117
- WO-A1-2013/092873
- CN-A- 111 640 602

## Description

La présente invention concerne un dispositif de coupure de circuit électrique à protection en surtension, et un procédé de coupure de circuit électrique associé.

L'invention s'applique en particulier pour les dispositifs de coupure de type statique, à semi-conducteur(s), en particulier du type SSCB (pour « solid state circuit breaker ») ou SCCB (pour « SemiConductor circuit breaker »).

Ce type de dispositif de coupure statique est avantageusement utilisable dans les systèmes de distribution électrique à courant continu. En effet, dans de tels systèmes, un défaut électrique provoque une élévation rapide du courant à un niveau très élevé, et une coupure très rapide est nécessaire. De plus, un tel dispositif de coupure statique présente des avantages en cas de fort courant alternatif, ou pour l'atténuation d'arc électrique.

Un dispositif de coupure du type précité, également connu sous le nom de disjoncteur à semi-conducteur(s), comprend notamment un commutateur principal à semi-conducteur(s), comportant par exemple au moins un transistor, de type à effet de champ, MOSFET ou JFET, ou de type bipolaire à grille isolée (IGBT). Il comprend également un sectionneur (en anglais « disconnector »), qui réalise une fonction d'interrupteur principal. Le document WO2013092873 décrit un dispositif selon le préambule de la revendication 1.

On connaît des dispositifs de coupure à semi-conducteurs configurés pour être commandés selon trois états, qui sont respectivement : un état fermé, en anglais « ON », dans lequel le dispositif de coupure laisse passer le courant entre les terminaux de connexion entre lesquels il est connecté ; un état ouvert, en anglais « OFF », dans lequel le commutateur principal et le sectionneur sont ouverts, le courant électrique ne circule pas entre les terminaux de connexion ; et un état d'attente passive, en anglais « STANDBY », dans lequel le commutateur principal est ouvert mais le sectionneur est fermé.

Les composants à semi-conducteurs doivent être protégés contre des surtensions, en particulier dans les états « ON » et « STANDBY » du dispositif de coupure.

Il est connu d'associer au commutateur principal à semi-conducteurs un dispositif de protection à varistance, par exemple une varistance composée d'oxydes métalliques ou MOV (pour « Metal Oxide Varistance »), connecté en parallèle du commutateur principal à semi-conducteurs et capable de supporter une énergie très élevée, et donc d'assurer une protection lors de la survenue d'un défaut électrique provoquant la disjonction. Ce type de dispositif de protection est efficace pour la protection en cas de survenue d'une forte surtension ponctuelle, par exemple lors de la coupure ou disjonction (passage de l'état « ON » vers l'état « OFF ») ou de lors du passage de l'état « ON » vers l'état « STANDBY ». Lors de la fermeture du sectionneur, en état d'attente passive « STANDBY », il est également nécessaire d'éviter l'endommagement de la varistance en cas de survenue d'une surtension, en particulier d'une surtension provenant du réseau de distribution électrique auquel est connecté le dispositif de coupure statique.

De plus, il est également nécessaire d'assurer la protection du commutateur principal à semi-conducteurs lorsque le dispositif de coupure est en état « STANDBY », en cas de survenue d'une surtension excessive.

A cet effet, l'invention propose, selon un aspect, un dispositif de coupure de circuit électrique à protection en surtension, comportant une paire de terminaux de connexion, un commutateur principal à semi-conducteur(s) comportant au moins un composant semi-conducteur et une paire de contacts séparables formant un sectionneur connecté en série avec le commutateur principal à semi-conducteur(s) entre les terminaux de connexion. Ce dispositif de coupure électrique comporte un premier système de protection connecté en parallèle du commutateur principal, le premier système de protection comportant un premier dispositif de protection comportant une varistance et un premier commutateur connecté en série avec le premier dispositif de protection, et un deuxième système de protection, connecté en parallèle dudit premier système de protection et dudit commutateur principal à semi-conducteur(s), le deuxième système de protection comportant un deuxième dispositif de protection comprenant une diode de suppression de tensions transitoires.

Avantageusement, le dispositif de coupure proposé comporte deux systèmes de protection connectés en parallèle du commutateur principal à semi-conducteurs, le premier système de protection comprenant une varistance et le deuxième circuit de protection comprenant une diode de suppression de tensions transitoires, ce qui permet d'assurer une protection complète du commutateur principal à semi-conducteurs et de la varistance contre les surtensions, en particulier dans l'état d'attente passive « STANDBY ».

Le dispositif de coupure selon l'invention peut présenter une ou plusieurs des caractéristiques ci-dessous, prises indépendamment ou selon toutes les combinaisons acceptables.

Le deuxième système de protection comprend en outre un deuxième commutateur connecté en série avec le deuxième dispositif de protection.

Le deuxième commutateur du deuxième système de protection est du type à thyristors, comprenant deux thyristors connectés en parallèle et en opposition.

Le deuxième commutateur du deuxième système de protection comprend au moins un transistor à effet de champ JFET.

Le dispositif comprend en outre un contrôleur électronique connecté au commutateur principal à semi-conducteur(s) et un module de mesure de courant circulant entre les terminaux de connexion, le contrôleur électronique étant configuré pour faire commuter le commutateur principal à semi-conducteur(s) d'un état fermé vers un état ouvert lorsque le courant mesuré par le module de mesure de courant dépasse un seuil de courant de coupure prédéterminé.

Le contrôleur électronique est en outre configuré pour commander ledit premier commutateur du premier système de protection, et, lorsque le deuxième système de protection comprend en outre un deuxième commutateur, ledit contrôleur électronique est en outre configuré pour commander ledit deuxième commutateur.

Le premier commutateur du premier système de protection comprend deux thyristors connectés en parallèle et en opposition.

Le commutateur principal à semi-conducteurs comporte au moins un transistor à effet de champ ou bipolaire à grille isolée.

Selon un autre aspect, l'invention concerne un procédé de coupure de circuit électrique, mis en œuvre par un dispositif de coupure tel que brièvement décrit ci-dessus, comportant, lorsque le dispositif de coupure est dans un état fermé dans lequel un courant électrique circule entre les terminaux de connexion :
- sur réception d'une commande à distance ou lorsque ledit courant électrique circulant entre les terminaux de connexion dépasse un seuil de courant de coupure prédéterminé, commutation du commutateur principal d'un état fermé vers un état ouvert, induisant une circulation de courant électrique par le premier système de protection,
- puis, lorsque le courant électrique est inférieur au seuil de courant de coupure prédéterminé, commande d'ouverture du premier commutateur du premier système de protection, et, en cas de présence d'un deuxième commutateur dans le deuxième système de protection, commande de fermeture dudit deuxième commutateur, le dispositif de coupure étant alors dans un état d'attente passive

Selon un mode de réalisation, le procédé comporte, partant de l'état d'attente passive du dispositif de coupure, sur réception d'une commande à distance ou d'une commande manuelle d'ouverture du dispositif de coupure, ouverture du sectionneur, et, en cas de présence d'un deuxième commutateur, ouverture du deuxième commutateur, le dispositif de coupure étant alors dans un état ouvert.

Selon un mode de réalisation, le procédé comporte, sur réception d'une commande manuelle ou d'une commande à distance de fermeture du dispositif de coupure, passage du dispositif de coupure de l'état ouvert à l'état d'attente passive par fermeture du sectionneur et, en cas de présence d'un deuxième commutateur, fermeture du deuxième commutateur, puis, sur réception d'une commande ou automatiquement, passage du dispositif de coupure de l'état d'attente passive à l'état fermé, par commande de fermeture du commutateur principal et du premier commutateur du premier système de protection, et en cas de présence d'un deuxième commutateur, commande d'ouverture du deuxième commutateur.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 représente schématiquement un dispositif de coupure selon un premier mode de réalisation ;
[Fig 2] la figure 2 représente schématiquement un dispositif de coupure selon un deuxième mode de réalisation ;
[Fig 3] la figure 3 représente schématiquement un mode de réalisation d'un premier commutateur et d'un deuxième commutateur de la figure 2 ;
[Fig 4] la figure 4 représente schématiquement un autre mode de réalisation du deuxième commutateur de la figure 2 ;
[Fig 5] [Fig 6] [Fig 7] les figures 5, 6 et 7 illustrent les états des commutateurs et interrupteurs et le flux de circulation du courant électrique dans divers états du dispositif de coupure ;
[FIG 8] la figure 8 est un organigramme d'une première partie du procédé de coupure de circuit mis en œuvre par un dispositif de coupure de circuit selon un mode de réalisation, et
[FIG 9] la figure 9 est un organigramme d'une deuxième partie du procédé de coupure de circuit mis en œuvre par un dispositif de coupure de circuit selon un mode de réalisation.

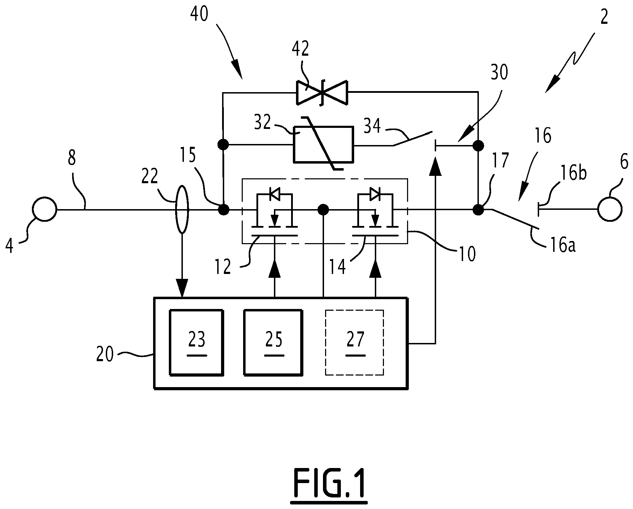

La figure 1 représente un dispositif de coupure de circuit électrique 2, comportant une paire de terminaux de connexion 4, 6, ces terminaux de connexion étant destinés à être raccordés ou connectés chacun à un conducteur électrique d'un circuit électrique non représenté.

Par exemple, un des terminaux de connexion est connecté au réseau de distribution électrique, et l'autre terminal de connexion est connecté à une charge électrique.

Il est clair pour l'homme du métier qu'un dispositif de coupure 2 représente un seul pôle de connexion et peut être adapté pour une installation monophasée ou polyphasée, par exemple comportant trois conducteurs de phase et un conducteur de neutre. Le nombre de dispositifs de coupure par terminal de connexion 4, 6 est adapté en fonction du nombre de phases.

Le dispositif de coupure 2 comporte un conducteur de courant principal 8 entre les terminaux de connexion 4 et 6.

Un commutateur principal à semi-conducteur(s) 10 est connecté entre un premier point de connexion 15 et un deuxième point de connexion 17 du conducteur principal 8.

Dans l'exemple illustré, le commutateur principal à semi-conducteur 10 comprend des composants à semi-conducteurs 12, 14, qui sont ici deux commutateurs à transistors 12, 14, connectés en série dans des sens différents, par exemple des transistors à effet de champ, MOSFET ou JFET, ou de type bipolaire à grille isolée (IGBT), chaque transistor ayant un calibre de fonctionnement choisi en fonction du courant, de la tension et des pertes maximales tolérées.

Bien entendu, ce commutateur principal à semi-conducteurs 10 peut comporter, selon des variantes, un nombre différent de transistors, en parallèle ou en série.

Le dispositif de coupure 2 comporte en outre un sectionneur 16, qui comprend deux contacts 16a, 16b séparables. Ce sectionneur 16 est actionnable pour passer d'un état ouvert, dans lequel les contacts 16a et 16b sont séparés, le passage de courant électrique entre le point de connexion 17 et le terminal 6 étant alors coupé, à un état fermé dans lequel les contacts 16a, 16b sont joints, et donc laissent passer un courant électrique entre le point de connexion 17 et le terminal de connexion 6. En d'autres termes, le sectionneur 16 réalise une fonction d'interrupteur principal.

Le dispositif de coupure 2 comporte en outre un contrôleur électronique 20, qui est une unité programmable comportant un processeur 23 et une mémoire 25, et qui est adapté pour exécuter des instructions de code.

Le contrôleur 20 est, en variante, formé par un circuit intégré dédié (en anglais, « Application-Specific Integrated Circuit »), par un ensemble de composants logiques programmables, ou encore par tout ensemble de composants électroniques.

Le contrôleur 20 est configuré pour communiquer avec un module 22 de mesure de courant, par exemple un capteur de courant 22 adapté pour mesurer périodiquement (échantillonner) des valeurs d'intensité de courant dans le conducteur principal 8, le contrôleur 20 étant configuré pour recevoir des valeurs numériques d'intensité de courant mesuré.

En outre, le contrôleur 20 est configuré pour mettre en œuvre un procédé de surveillance de l'intensité de courant, et pour commander l'ouverture ou la fermeture des divers organes de commutation ou de coupure du dispositif de coupure 2.

Le contrôleur 20 est en particulier configuré pour commander une ouverture des commutateurs à transistors du commutateur principal 10 lorsque d'intensité de courant mesurée dépasse un seuil de courant de coupure prédéterminé.

De plus, le contrôleur 20 est configuré pour commander l'ouverture du sectionneur 16.

Optionnellement, le contrôleur 20 comporte une interface de communication 27, par exemple une interface de communication radio. Dans ce cas, le contrôleur 20 est adapté pour recevoir des commandes d'un dispositif externe (non illustré), par exemple d'une télécommande, permettant alors de commander à distance le changement d'état du dispositif de coupure 2, notamment le passage de l'état « ON » vers l'état « STANDBY » et possiblement vice-versa, de l'état « STANDBY » vers l'état « OFF ».

Le dispositif de coupure 2 comporte également un premier système de protection 30 connecté en parallèle du commutateur principal 10 et un deuxième système de protection 40 connecté en parallèle du commutateur principal 10.

Le premier système de protection 30 comporte un dispositif de protection 32 à varistance, qui comporte par exemple une varistance composée d'oxydes métalliques, également appelée MOV (pour « Metal Oxide Varistance » en anglais), connectée en série avec un premier commutateur 34.

Le premier système de protection 30 est connecté en parallèle du commutateur principal 10, entre les points de connexion 15 et 17. En d'autres termes, le premier dispositif de protection 32 est connecté entre le point de connexion 15 et une entrée du premier commutateur 34, et une sortie du premier commutateur 34 est connectée au point de connexion 17.

Dans des modes de réalisation, le dispositif de protection 32 à varistance est calibré en tension, pour ne pas dépasser la tension d'avalanche des semi-conducteurs 12, 14 avec le courant maximal obtenu en cas de court-circuit (typiquement 500V ou 1000V si semi-conducteurs 750V ou 1,2kV pour un courant de 10 fois le courant nominal du dispositif de coupure 2) ou calibré en puissance, pour tolérer la puissance maximale stockée dans les éléments inductifs du circuit protégé par le disjoncteur et qui seront à dissiper (typiquement 10 à 100 Joules).

Le deuxième système de protection 40 comporte, dans le mode de réalisation de la figure 1, un dispositif de protection 42 à diode de suppression de tensions transitoires ou TVS (pour « Transient Voltage Suppression »).

Dans des modes de réalisation, le dispositif de protection 42 à diode de suppression de tensions transitoires est calibré en tension, pour ne pas dépasser la tension d'avalanche des semi-conducteurs 12, 14 avec le courant maximal obtenu en cas de surtension transitoire de type foudre (typiquement 600V ou 1100V si semi-conducteurs 750V ou 1,2kV pour un courant de 2 ou 4 kA) ou en puissance, pour tolérer le courant et la tension pendant une onde de type foudre d'une durée d'environ 50µs.

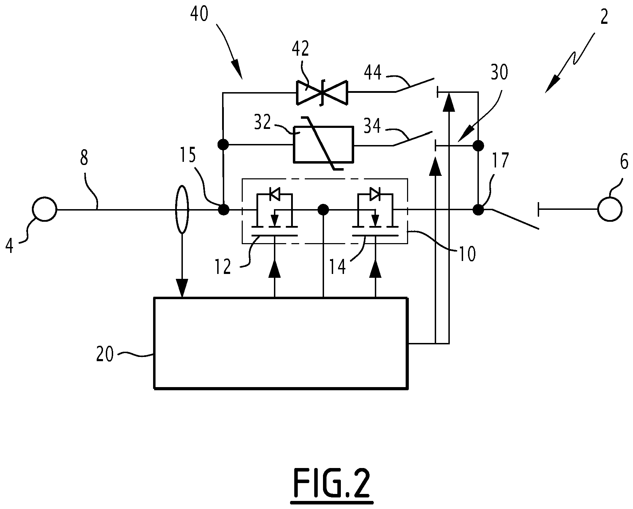

Dans un deuxième mode de réalisation, illustré schématique à la figure 2, le dispositif de coupure 2 comporte en outre, dans le deuxième système de protection 40, un deuxième commutateur 44 connecté en série avec le dispositif de protection 42 à diode de suppression de tensions transitoires.

Le deuxième système de protection 40 est connecté en parallèle du commutateur principal 10, entre les points de connexion 15 et 17. En d'autres termes, le dispositif de protection 42 est connecté entre le point de connexion 15 et une entrée du deuxième commutateur 44, et une sortie du deuxième commutateur 44 est connectée au point de connexion 17.

Le premier commutateur 34 et le deuxième commutateur 44 sont par exemple des commutateurs à thyristor.

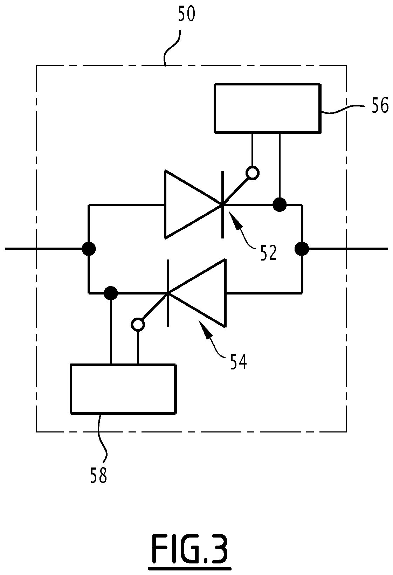

Dans un mode de réalisation, le premier commutateur 34 et le deuxième commutateur 44 sont tous deux réalisés sous la forme d'un commutateur 50 à deux thyristors en opposition, selon le mode de réalisation illustré schématiquement dans la figure 3.

Un commutateur à thyristors 50 comporte, dans le mode de réalisation de la figure 3, un premier thyristor 52 et un deuxième thyristor 54, le premier thyristor 52 étant commandé par un module de commande 56 et le deuxième thyristor 54 étant commandé par un module de commande 58.

Dans le dispositif de coupure 2, le module de commande 58 de chacun des commutateurs est contrôlé par le contrôleur 20. En d'autres termes, le contrôleur 20 est configuré pour contrôler l'état du premier commutateur 34, et du deuxième commutateur 44.

Avantageusement, un commutateur à thyristors 50 est peu coûteux et robuste.

Avantageusement, un commutateur à thyristors 50 passe automatiquement en mode ouvert (« OFF ») lorsque l'intensité du courant le traversant passe à zéro.

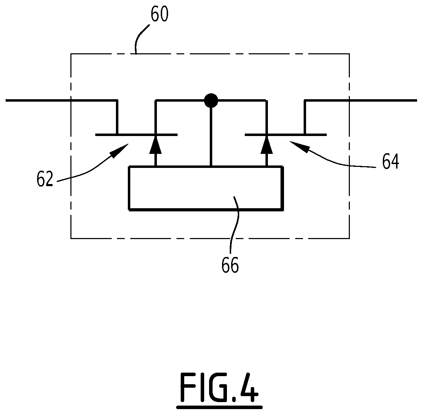

Selon une variante, le deuxième commutateur 44 est de type commutateur à transistors à effet de champ JFET, comme illustré schématiquement dans la figure 4.

Un tel commutateur à transistors à effet de champ, schématiquement représenté à la figure 4 et référencé 60, comporte deux transistors à effet de champ 62, 64 et un module de commande 66.

Dans le dispositif de coupure 2, lorsque le deuxième commutateur 44 et du type représenté dans la figure 4, le module de commande 66 est contrôlé par le contrôleur 20. En d'autres termes, le contrôleur 20 est configuré pour contrôler l'état du deuxième commutateur 44.

Avantageusement, un tel commutateur 60 est fermé au repos., ce qui permet de protéger les semi-conducteurs.

De préférence, le dispositif de coupure 2 est intégré dans un boîtier dédié.

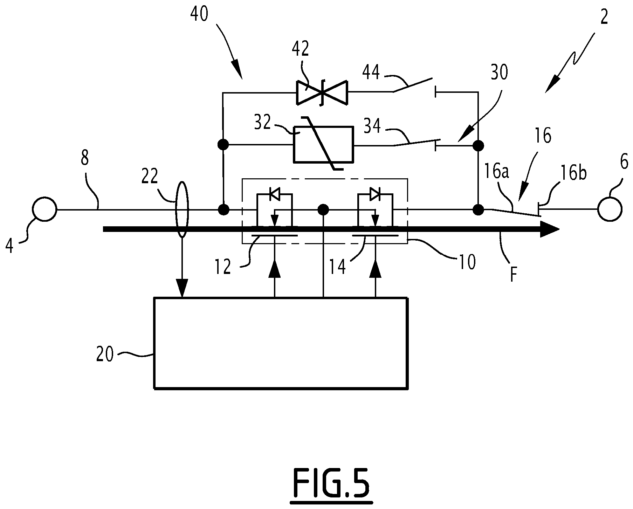

Les figures 5, 6 et 7 illustrent le fonctionnement des premier et deuxième systèmes de protection, selon divers états du dispositif de coupure 2.

Le dispositif de coupure 2 est représenté à l'état « ON » à la figure 5.

En fonctionnement nominal, lorsque le courant électrique qui traverse le conducteur principal 8 est inférieur à un seuil de courant de coupure, le dispositif de coupure 2 est à l'état « ON », le sectionneur 16 est fermé, le premier commutateur 34 est fermé, et, dans le mode de réalisation dans lequel il est présent, le deuxième commutateur 44, est ouvert. Le commutateur principal 10 à semi-conducteurs est en état fermé.

Ainsi, le courant électrique circule entre le terminal de connexion 4 et le terminal de connexion 6 via le commutateur principal 10 (transistors 12 et 14 fermés), et le sectionneur 16. La circulation du courant électrique est schématisée par la flèche F.

Avantageusement, le premier commutateur 34 est fermé de manière à ce que le premier système de protection 30 soit opérationnel.

En cas de dépassement du seuil de courant de coupure, ou sur commande à distance reçue par le contrôleur 20, le dispositif de coupure passe de l'état « ON » vers l'état « STANDBY ».

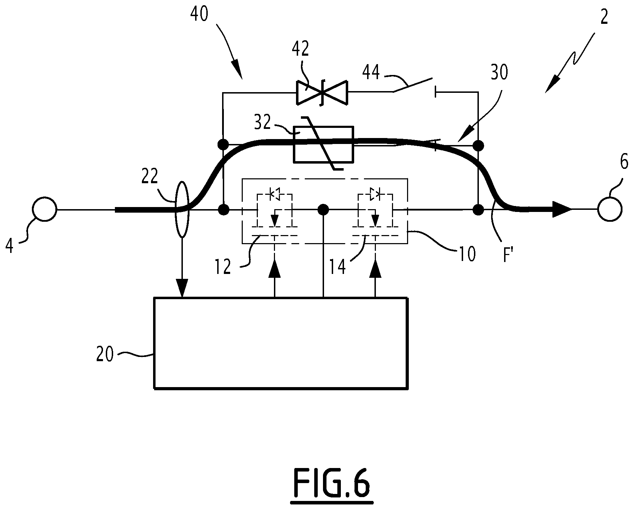

Dans le cas d'une disjonction (« tripping » en anglais), lorsque l'intensité de courant dépasse le seuil de courant de coupure, le premier système de protection 30 est mis en action, le courant électrique passant par le dispositif de protection à varistance 32 qui est adapté pour limiter la tension. Le commutateur principal 10 passe à l'état ouvert, le sectionneur 16 étant fermé, le premier commutateur 34 est fermé et le deuxième commutateur 44 étant ouvert. La circulation du courant électrique est schématisée par la flèche F' dans la figure 6.

Le dispositif de coupure 2 est en état d'attente passive ou « STANDBY » lorsque, suite à une commande à distance ou après limitation de la surtension en cas de déclenchement de la coupure par disjonction, l'intensité du courant électrique est inférieure au seuil de courant de coupure.

Dans cet état, le commutateur principal 10 est ouvert, le sectionneur 16 est fermé.

Le contrôleur 20 commande avantageusement l'ouverture du premier commutateur 34 du premier système de protection et la fermeture du deuxième commutateur 44 du deuxième système de protection.

De préférence, l'ouverture du premier commutateur 34 du premier système de protection et la fermeture du deuxième commutateur 44 du deuxième système de protection sont réalisées simultanément ou sensiblement simultanément.

Ainsi avantageusement, le dispositif de protection à varistance 32 du premier système de protection 30 est protégé, le courant ne circulant plus dans ce premier système de protection 30, et, en cas de survenue d'une surtension, par exemple une surtension élevée ponctuelle ou une surtension modérée du réseau de distribution, pendant une durée donnée, par exemple une surtension de 20% pour une durée de l'ordre d'une minute le deuxième système de protection 40 est utilisé.

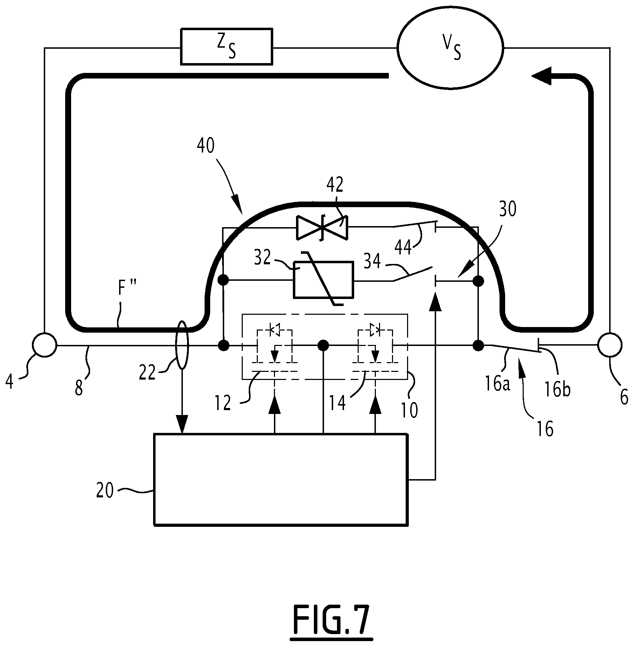

La circulation du courant est représentée schématiquement par la flèche F" dans la figure 7.

Sur cette figure 7 sont en outre représentés schématiquement la tension Vs appliquée pendant une surtension du réseau de distribution électrique (par exemple 4kV), ainsi que l'impédance Zs de cette source.

Lorsque le dispositif de coupure 2 est à l'état « OFF » (ouvert), sur commande à distance ou via une commande manuelle appliquée directement sur un organe de commande présent en façade d'un boîtier encapsulant le dispositif de coupure, le commutateur principal 10, le sectionneur 16, ainsi que le premier commutateur 34 et le deuxième commutateur 44 sont ouverts.

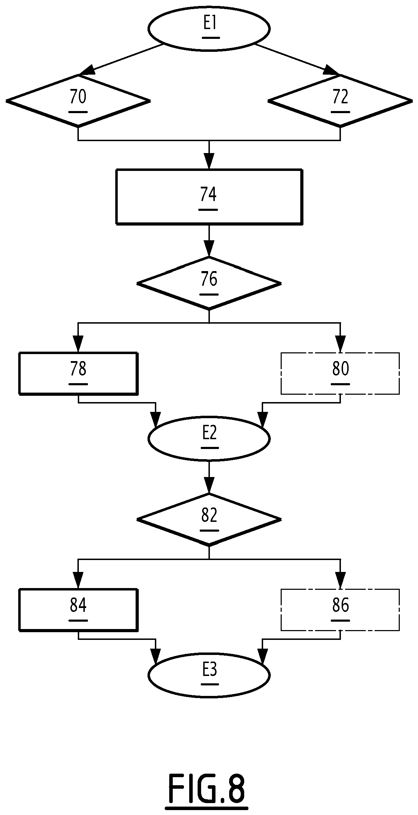

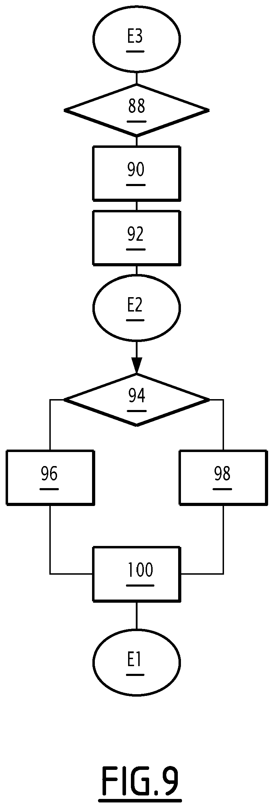

La figure 8 est un synoptique des principales étapes d'une première partie du procédé de coupure de circuit électrique mis en oeuvre par un dispositif de coupure 2, et la figure 9 est un synoptique des principales étapes d'une deuxième partie du procédé de coupure de circuit électrique mis en oeuvre par un dispositif de coupure 2.

Dans un mode de réalisation, les étapes du procédé sont mises en oeuvre par le contrôleur 20 du dispositif de coupure 2.

Partant d'un état fermé (« ON »), référencé E1 sur la figure 8, du dispositif de coupure 2, dans lequel un courant électrique circule entre les terminaux de connexion 4 et 6 en fonctionnement nominal, le procédé comporte une surveillance 70 d'un éventuel dépassement du seuil de courant de coupure, consistant à comparer le courant électrique I circulant dans le conducteur au seuil de coupure Ic, ainsi qu'une surveillance 72 de réception d'une commande à distance d'ouverture du dispositif de coupure 2.

Lorsque la surveillance 70 de dépassement du seuil de courant de coupure ou la surveillance 72 fournissent une réponse positive, le procédé comprend une commutation 74 du commutateur principal 10 de l'état fermé vers l'état ouvert, induisant une circulation de courant électrique par le premier système de protection 30.

Le passage du courant électrique en dessous du seuil de courant de coupure est surveillé (étape 76), et lorsque le courant électrique est inférieur au seuil de courant de coupure prédéterminé, le procédé comporte une commande 78 d'ouverture du premier commutateur 34 du premier système de protection 30. Dans le mode de réalisation où le deuxième système de protection 40 comprend un deuxième commutateur 44, le procédé comporte en outre une commande 80 de fermeture du deuxième commutateur 44.

Les étapes 78 et 80 sont réalisées simultanément ou sensiblement simultanément.

A l'issue de ces étapes, le dispositif de coupure 2 se trouve dans l'état d'attente passive (« STANDBY ») référence E2 sur la figure 8.

Le procédé comporte alors une vérification 82 de réception de commande d'ouverture du dispositif de coupure, cette commande pouvant être manuelle ou à distance, et en cas de vérification positive, une ouverture 84 du sectionneur 16, et, en cas de présence d'un deuxième commutateur 44, une ouverture 86 du deuxième commutateur 44, le dispositif de coupure 2 étant alors dans un état ouvert (« OFF ») référencé E3 sur la figure 8.

Dans une deuxième partie (sens « retour »), illustrée dans la figure 9, le procédé comporte une vérification 88 de réception de commande de fermeture du dispositif de coupure, cette commande pouvant être manuelle ou à distance, et en cas de vérification positive, en cas de présence d'un deuxième commutateur 44, une commande 90 de fermeture du deuxième commutateur 44 et une commande 92 de fermeture du sectionneur 16. En d'autres termes, les étapes 90 et 92 correspondent respectivement aux actions inverses des étapes 86 et 84.

Le dispositif de coupure 2 passe ainsi de l'état ouvert à l'état d'attente passive E2.

Ensuite, sur réception de commande ou automatiquement (étape 94), le procédé comporte une commande 96 de fermeture du premier commutateur 34 du premier système de protection, et en cas de présence d'un deuxième commutateur 44, une commande 98 d'ouverture du deuxième commutateur 44.

En d'autres termes, les étapes 96 et 98 correspondent respectivement aux actions inverses des étapes 78 et 80.

Le procédé comporte également une étape 100 de fermeture du commutateur principal 10, inverse de l'action de l'étape 74.

Le dispositif de coupure 2 se trouve alors en l'état fermé E1, et le cas échéant, la première partie de procédé décrite en référence à la figure 8 s'applique.

Avantageusement, le dispositif de coupure 2 est protégé en surtension grâce aux premier et deuxième systèmes de protection, dans les états de fonctionnement « ON » et « STANDBY ». Ainsi, grâce à la présence en outre du sectionneur, le dispositif de coupure est protégé en surtension dans tous ses états de fonctionnement.

## Revendications

1. Dispositif de coupure de circuit électrique à protection en surtension, comportant une paire de terminaux de connexion (4,6), un commutateur principal (10) à semi-conducteur(s) comportant au moins un composant semi-conducteur (12, 14) et une paire de contacts séparables (16a, 16b) formant un sectionneur (16) connecté en série avec le commutateur principal (10) à semi-conducteur(s) entre les terminaux de connexion (4,6), le dispositif de coupure électrique (2) comportant un premier système de protection (30) connecté en parallèle du commutateur principal (10), le premier système de protection (30) comportant un premier dispositif de protection (32) comportant une varistance, **caractérisé en ce que** le premier système de protection comporte en autre un premier commutateur (34) connecté en série avec le premier dispositif de protection (32), et un deuxième système de protection (40), connecté en parallèle dudit premier système de protection (30) et dudit commutateur principal (10) à semi-conducteur(s), le deuxième système de protection (40) comportant un deuxième dispositif de protection (42) comprenant une diode de suppression de tensions transitoires.

2. Dispositif selon la revendication 1, dans lequel le deuxième système de protection (40) comprend en outre un deuxième commutateur (44) connecté en série avec le deuxième dispositif de protection (42).

3. Dispositif selon la revendication 2, dans lequel le deuxième commutateur (44) du deuxième système de protection (40) est du type à thyristors, comprenant deux thyristors (52, 54) connectés en parallèle et en opposition

4. Dispositif selon la revendication 2, dans lequel dans lequel le deuxième commutateur (44) du deuxième système de protection (40) comprend au moins un transistor à effet de champ JFET (62, 64).

5. Dispositif selon l'une quelconque des revendications 1 à 4, comprenant en outre un contrôleur électronique (20) connecté au commutateur principal (10) à semi-conducteur(s) et un module de mesure de courant (22) circulant entre les terminaux de connexion (4,6), le contrôleur électronique (20) étant configuré pour faire commuter le commutateur principal (10) à semi-conducteur(s) d'un état fermé vers un état ouvert lorsque le courant mesuré par le module de mesure de courant (22) dépasse un seuil de courant de coupure prédéterminé.

6. Dispositif selon la revendication 5, dans lequel le contrôleur électronique (20) est en outre configuré pour commander ledit premier commutateur (34) du premier système de protection (30), et, lorsque le deuxième système de protection (40) comprend en outre un deuxième commutateur (44), ledit contrôleur électronique (20) est en outre configuré pour commander ledit deuxième commutateur (44).

7. Dispositif selon l'une quelconque des revendications 1 à 6, dans lequel le premier commutateur (34) du premier système de protection comprend deux thyristors (52, 54) connectés en parallèle et en opposition.

8. Dispositif selon l'une quelconque des revendications 1 à 7, dans lequel ledit commutateur principal (10) à semi-conducteurs comporte au moins un transistor à effet de champ ou bipolaire à grille isolée.

9. Procédé de coupure de circuit électrique, mis en oeuvre par un dispositif de coupure (2) selon l'une des revendications 1 à 8, comportant, lorsque le dispositif de coupure est dans un état fermé (E1) dans lequel un courant électrique circule entre les terminaux de connexion (4,6),
- sur réception (72) d'une commande à distance ou lorsque ledit courant électrique circulant entre les terminaux de connexion (4, 6) dépasse (70) un seuil de courant de coupure prédéterminé, commutation (74) du commutateur principal (10) d'un état fermé vers un état ouvert, induisant une circulation de courant électrique par le premier système de protection (30),
- puis, lorsque le courant électrique est inférieur au seuil de courant de coupure prédéterminé, commande (78) d'ouverture du premier commutateur (34) du premier système de protection (30), et, en cas de présence d'un deuxième commutateur (44) dans le deuxième système de protection (40), commande de fermeture (80) dudit deuxième commutateur (44), le dispositif de coupure (2) étant alors dans un état d'attente passive (E2).

10. Procédé selon la revendication 9, comportant, partant de l'état d'attente passive du dispositif de coupure (2), sur réception (82) d'une commande à distance ou d'une commande manuelle d'ouverture du dispositif de coupure (2), ouverture (84) du sectionneur (16), et, en cas de présence d'un deuxième commutateur (44), ouverture (86) du deuxième commutateur (44), le dispositif de coupure (2) étant alors dans un état ouvert (E3).

11. Procédé selon la revendication 10, comportant, sur réception (88) d'une commande manuelle ou d'une commande à distance de fermeture du dispositif de coupure (2), passage du dispositif de coupure (2) de l'état ouvert à l'état d'attente passive par fermeture (92) du sectionneur (16) et, en cas de présence d'un deuxième commutateur (44), fermeture (90) du deuxième commutateur (44), puis, sur réception d'une commande ou automatiquement (94), passage du dispositif de coupure (2) de l'état d'attente passive à l'état fermé, par commande (96, 100) de fermeture du commutateur principal (10) et du premier commutateur (34) du premier système de protection, et en cas de présence d'un deuxième commutateur (44), commande (98) d'ouverture du deuxième commutateur (44).

## Patentansprüche

1. Stromkreisunterbrechungsvorrichtung mit Überspannungsschutz, umfassend ein Paar Verbindungsanschlüsse (4,6), einen Halbleiterhauptschalter (10), umfassend mindestens eine Halbleiterkomponente (12, 14) und ein Paar trennbare Kontakte (16a, 16b), die einen Trennschalter (16) bilden, der mit dem Halbleiterhauptschalter (10) zwischen den Verbindungsanschlüssen (4,6) in Reihe verbunden ist, die elektrische Unterbrechungsvorrichtung (2) umfassend
ein erstes
Schutzsystem (30), das parallel zu dem Hauptschalter (10) verbunden ist, das erste Schutzsystem (30) umfassend eine erste Schutzvorrichtung (32), umfassend einen Varistor, **dadurch gekennzeichnet, dass** das erste Schutzsystem ferner einen ersten Schalter (34) umfasst, der mit der ersten Schutzvorrichtung (32) in Reihe verbunden ist, und ein zweites Schutzsystem (40), das mit dem ersten Schutzsystem (30) und dem Halbleiterhauptschalter (10) parallel verbunden ist, das zweite Schutzsystem (40) umfassend eine zweite Schutzvorrichtung (42), umfassend eine Diode zur Unterdrückung von transienten Spannungen.

2. Vorrichtung nach Anspruch 1, wobei das zweite Schutzsystem (40) ferner einen zweiten Schalter (44) umfasst, der mit der zweiten Schutzvorrichtung (42) in Reihe verbunden ist.

3. Vorrichtung nach Anspruch 2, wobei der zweite Schalter (44) des zweiten Schutzsystems (40) vom Typ Thyristor ist, umfassend zwei Thyristoren (52, 54), die parallel und entgegengesetzt verbunden sind

4. Vorrichtung nach Anspruch 2, wobei der zweite Schalter (44) des zweiten Schutzsystems (40) mindestens einen Feldeffekttransistor JFET (62, 64) umfasst.

5. Vorrichtung nach einem der Ansprüche 1 bis 4, ferner umfassend eine elektronische Steuerung (20), der mit dem Halbleiterhauptschalter (10) verbunden ist, und ein Messmodul des Stroms (22), der zwischen den Verbindungsanschlüssen (4,6) fließt, wobei die elektronische Steuerung (20) konfiguriert ist, um den Halbleiterhauptschalter (10) von einem geschlossenen Zustand in einen offenen Zustand schalten zu lassen, wenn der von dem Strommessmodul (22) gemessene Strom einen vorbestimmten Unterbrechungsstromschwellenwert überschreitet.

6. Vorrichtung nach Anspruch 5, wobei die elektronische Steuerung (20) ferner konfiguriert ist, um den ersten Schalter (34) des ersten Schutzsystems (30) zu steuern, und, wenn das zweite Schutzsystem (40) ferner einen zweiten Schalter (44) umfasst, die elektronische Steuereinheit (20) ferner konfiguriert ist, um den zweiten Schalter (44) zu steuern.

7. Vorrichtung nach einem der Ansprüche 1 bis 6, wobei der erste Schalter (34) des ersten Schutzsystems zwei Thyristoren (52, 54) umfasst, die parallel und entgegengesetzt verbunden sind.

8. Vorrichtung nach einem der Ansprüche 1 bis 7, wobei der Halbleiterhauptschalter (10) mindestens einen Feldeffekt- oder Bipolartransistor mit isoliertem Gate umfasst.

9. Stromkreisunterbrechungsverfahren, das von einer Unterbrechungsvorrichtung (2) nach einem der Ansprüche 1 bis 8 durchgeführt wird, umfassend, wenn die Unterbrechungsvorrichtung sich in einem geschlossenen Zustand (E1) befindet, in dem ein elektrischer Strom zwischen den Verbindungsanschlüssen (4,6) fließt,
- bei Empfangen (72) eines Fernbefehls oder wenn der zwischen den Verbindungsanschlüssen (4, 6) fließende elektrische Strom einen vorbestimmten Unterbrechungsstromschwellenwert überschreitet (70), Umschalten (74) des Hauptschalters (10) von einem geschlossenen Zustand in einen offenen Zustand, wodurch ein elektrischer Stromfluss durch das erste Schutzsystem (30) induziert wird,
- dann, wenn der elektrische Strom unterhalb der vorbestimmten Unterbrechungsstromschwellenwerts ist, Befehlen (78) eines Öffnens des ersten Schalters (34) des ersten Schutzsystems (30), und, im Fall eines Vorhandenseins eines zweiten Schalters (44) in dem zweiten Schutzsystem (40), Befehlen eines Schließens (80) des zweiten Schalters (44), wobei die Unterbrechungsvorrichtung (2) dann in einem passiven Bereitschaftszustand (E2) ist.

10. Verfahren nach Anspruch 9, umfassend, ausgehend von dem passiven Bereitschaftszustand der Trennvorrichtung (2), bei Empfangen (82) eines Fernbefehls oder eines manuellen Befehls zum Öffnen der Unterbrechungsvorrichtung (2), Öffnen (84) des Trennschalters (16), und, bei Vorhandensein eines zweiten Schalters (44), Öffnen (86) des zweiten Schalters (44), wobei die Unterbrechungsvorrichtung (2) dann in einem offenen Zustand (E3) ist.

11. Verfahren nach Anspruch 10, umfassend, bei Empfangen (88) eines manuellen Befehls oder eines Fernbefehls zum Schließen der Unterbrechungsvorrichtung (2) einen Übergang der Unterbrechungsvorrichtung (2) von dem offenen Zustand in den passiven Bereitschaftszustand durch Schließen (92) des Trennschalters (16), und im Fall eines Vorhandenseins eines zweiten Schalters (44), Schließen (90) des zweiten Schalters (44), dann, bei Empfangen eines Befehls oder automatisch (94), Umschalten der Unterbrechungsvorrichtung (2) von dem passiven Bereitschaftszustand in den geschlossenen Zustand durch Befehl (96, 100) zum Schließen des Hauptschalters (10) und des ersten Schalters (34) des ersten Schutzsystems, und im Fall eines Vorhandenseins eines zweiten Schalters (44), Befehlen (98) eines Öffnens des zweiten Schalters (44).

## Claims

1. An electrical circuit-breaking device with overvoltage protection, comprising a pair of connection terminals (4,6), a semiconductor(s) main switch (10) comprising at least one semiconductor component (12, 14) and a pair of separable contacts (16a, 16b) forming a disconnector (16) connected in series with the semiconductor(s) main switch (10) between the connection terminals (4, 6), the electrical switching device (2) comprising
a first
protection system (30) connected in parallel with the main switch (10), the first protection system (30) comprising a first protection device (32) comprising a varistor, **characterised in that** the first protection system further comprises a first switch (34) connected in series with the first protection device (32), and a second protection system (40), connected in parallel with the said first protection system (30) and the said main semi-conductor switch (10), the second protection system (40) comprising a second protection device (42) comprising a diode for suppressing transient voltages.

2. A device according to claim 1, wherein the second protection system (40) further comprises a second switch (44) connected in series with the second protection device (42).

3. Device according to claim 2, in which the second switch (44) of the second protection system (40) is of the thyristor type, comprising two thyristors (52, 54) connected in parallel and in opposition

4. A device according to claim 2, wherein the second switch (44) of the second protection system (40) comprises at least one JFET (62, 64).

5. A device according to any one of claims 1 to 4, further comprising an electronic controller (20) connected to the semiconductor(s) main switch (10) and a current measurement module (22) flowing between the connection terminals (4,6), the electronic controller (20) being configured to switch the semiconductor(s) main switch (10) from a closed state to an open state when the current measured by the current measurement module (22) exceeds a predetermined cut-off current threshold.

6. A device according to claim 5, wherein the electronic controller (20) is further configured to control said first switch (34) of the first protection system (30), and, when the second protection system (40) further comprises a second switch (44), said electronic controller (20) is further configured to control said second switch (44).

7. A device according to any one of claims 1 to 6, wherein the first switch (34) of the first protection system comprises two thyristors (52, 54) connected in parallel and in opposition.

8. A device according to any one of claims 1 to 7, wherein said semiconductor main switch (10) comprises at least one insulated gate field effect or bipolar transistor.

9. Process for breaking an electrical circuit, implemented by a breaking device (2) according to one of claims 1 to 8, comprising, when the breaking device is in a closed state (E1) in which an electrical current flows between the connection terminals (4,6),
- on receiving (72) a remote command or when said electric current flowing between the connection terminals (4, 6) exceeds (70) a predefined cut-off current threshold, switching (74) of the main switch (10) from a closed state to an open state, inducing a flow of electric current through the first protection system (30),
- then, when the electrical current is less than the predetermined cut-off current threshold, command (78) to open the first switch (34) of the first protection system (30), and, if a second switch (44) is present in the second protection system (40), command to close (80) said second switch (44), the cut-off device (2) then being in a passive standby state (E2).

10. A method according to claim 9, comprising, starting from the passive standby state of the switching device (2), on receipt (82) of a remote command or a manual command to open the switching device (2), opening (84) of the disconnector (16), and, if a second switch (44) is present, opening (86) of the second switch (44), the switching device (2) then being in an open state (E3).

11. A method according to claim 10, comprising, on receiving (88) a manual command or a remote command to close the switching device (2), switching the switching device (2) from the open state to the passive standby state by closing (92) the isolating switch (16) and, if a second switch (44) is present, closing (90) the second switch (44), then, on receiving a command or automatically (94), the switching device (2) changes from the passive standby state to the closed state, by command (96, 100) to close the main switch (10) and the first switch (34) of the first protection system, and if a second switch (44) is present, command (98) to open the second switch (44).
